# EUROPEAN PATENT SPECIFICATION

(11) **EP 1 421 136 B1**
(45) Date of publication and mention of the grant of the patent: **06.05.2009**
(21) Application number: 02751397.7
(22) Date of filing: 07.08.2002
(51) Int. Cl.: C08J 3/22, C08L 23/28, C08L 27/06

(54) **MASTERBATCH**
MASTERBATCH
MELANGE MAITRE

(30) Priority: 29.08.2001 GB 0120985
(43) Date of publication of application: 26.05.2004
(73) Proprietor: GAUKROGER, Anthony Richard, Caerphilly CF83 2SL (GB); Morris, Stephen Anthony, Monmouth NP25 4HZ (GB)
(72) Inventor: GAUKROGER, Anthony, Richard Ty Newydd, Caerphilly CF83 2SL (GB)
(74) Representative: Cawdell, Karen Teresa
(86) International application number: PCT/GB2002/003644
(87) International publication number: WO 2003/020801

(56) References cited:
- AU-A- 533 826
- GB-A- 1 063 187
- GB-A- 1 372 963
- RO-B- 102 047
- US-A- 3 929 700
- US-A- 3 936 417

## Description

The present invention is concerned with a method of colouring thermoplastics, and in particular colouring PVC. The present invention is also concerned with a masterbatch for use in colouring thermoplastics, a method of making such a masterbatch, and a masterbatch carrier system for PVC.

In order to provide coloured thermoplastics it is known to colour a base thermoplastic (which is typically of a neutral colour) by the use of pigment packs and/or liquid colour concentrates, or using dry, typically pelletised, coloured concentrates known in the plastics industry as a masterbatch. Alternatively, the thermoplastic material is supplied as a coloured compound.

Masterbatches are typically produced in 2 types, namely Universal and Polymer specific. Universal masterbatches are general purpose masterbatches typically used at about 1 to 2% by weight LDR. The Universal masterbatch, as its name implies, is based on a universal carrier type in order to minimise the effects on a polymer it is used in.

However, known Universal masterbatches have a number of disadvantages which include lamination, a decrease in physical properties (for example reduction in impact strength, flexural modulus etc.) and difference in shrinkages.

Polymer specific masterbatches are based on the polymers that the concentrate is to be used in, and are typically used at about 1 to 5% by weight LDR. Whilst there appears to be little adverse reaction between the masterbatch carrier and the base polymer, Polymer specific masterbatches are disadvantageous as a separate masterbatch has to be formulated and manufactured for each polymer; thereby increasing the number of masterbatches produced and creating the requirement of additional storage by the actual manufacturers of the coloured thermoplastics. Furthermore, each time a producer modifies the polymer, a different masterbatch has to be manufactured thereby rendering the old polymer specific masterbatch obsolete.

PVC (Polyvinylchloride) is an extremely versatile, commodity thermoplastic. Its mechanical properties can be easily adjusted to meet specific requirements of the end user. However, a main problem with the use of PVC is its low thermostability during processing. As PVC degrades, hydrogen chloride is given off which not only is undesirable in itself but also has a disadvantage of further accelerating the degradation of PVC.

The dehydrochlorination problem has resulted in PVC being unpopular with a large section of the thermoplastics processing industry. The industry therefore tends to be split into processors who base their business on PVC and those whose base their businesses on all polymers except PVC.

There are two types of PVC, plasticised or flexible PVC (PVC), and unplasticised or rigid PVC (PVCu).

Plasticised or flexible PVC is generally produced as a coloured compound, it can be masterbatched using 1 to 2% by weight Universal masterbatch, or 2 to 5% by weight flexible PVC-based masterbatch.

Unplasticised or rigid PVC is almost always produced as a coloured compound. However it is possible to be mass coloured using a Universal masterbatch (which is typically unpredictable to the success of the end product), or using a flexible PVC masterbatch which is disadvantageous as it incorporates a plasticiser into a material which is selected for its unplasticised nature.

The production of coloured PVC (plasticised or unplasticised) is undesirable as large quantities of each individual colour has to be produced by the manufacturer and therefore stored by the end user. Masterbatches are advantageous as the neutral coloured PVC can be produced on mass and subsequently coloured, typically using, up to about 6% of the masterbatch.

A masterbatch is disclosed in RO-102047 which comprises PVC, chlorinated polyethylene, acrylic flow modifier and further additives for use in rigid PVC. AU 0533826A discloses a method for extruding a rigid PVC formulation which comprises PVC, a methacrylate polymer impact modifier, an acrylic processing aid and a pigment masterbatch have a law density polyethylene carrier. US 3936417A discloses extrusion of a PVC composition containing an acrylic processing aid and a calcium carbonate masterbatch in chlorinated polyethylene.

However, all of the prior art masterbatches listed above include PVC which is disadvantageous due to its instability during processing.

As mentioned hitherto before, the main problem with colouring PVC by the masterbatch route is due to the low thermostability of PVC. In addition, as a result of this low thermostability, processing of PVC tends to be low shear, so as to not subject the polymer to localised overheating due to the creation of frictional heat.

Masterbatches rely on being "worked" to wet out into the polymer and homogenise the compound. This working is not a problem for more stable thermoplastics. Typical pigment loading for masterbatches are 20 - 70% and it is very difficult to subject a PVC compound to the amount of shear required to incorporate pigments at these levels.

It is therefore an aim of the present invention to alleviate at least some of the problems identified above.

It is a further aim of the present invention to provide a multi-purpose masterbatch for use in colouring PVC (in particular PVCu).

It is yet a further aim of the present invention to provide a method of making a masterbatch suitable for use in colouring thermoplastics.

According to yet a further aim of the present invention, there is provided a method of manufacturing a materbatch; the masterbatch being suitable for use in the colouring of thermoplastics.

It is yet a further aim of the present invention to provide a formulation for use in introducing performance enhancing additives to PVC.

According to the present invention, there is therefore provided a multi-purpose matserbatch carrier which includes:
i) a chlorinated polyolefin;
ii) an acrylic processing aid;
iii) an acrylic impact modifier; and
iv) at least one dye, pigment or functional additive.

The carrier is preferably for use with dyes, pigments, functional additives or the like, which may, for example, be added to the masterbatch when the masterbatch is being manufactured.

The present invention further extends to a masterbatch which includes:
i) a chlorinated polyolefin;
ii) an acrylic processing aid;
iii) an acrylic impact modifier; and
iv) at least one dye, pigment or functional additive.

The masterbatch may further include processing additives, incidental ingredients, fillers and/or impurities.

A functional additive is an additive which is beneficial to the end PVC product. Functional additives may include UV stabilisers, anti-stats, flame retardants or the like.

A processing aid for PVC is a thermoplastic resin added to the PVC compound in relatively small quantities in order to improve its processing characteristics on the way from the raw material to the semifinished and finished article.

Processing aids advantageously possess one or more of the following properties:
- acceleration of the melting process
- improvement of the rheological properties in the thermoplastic state
- improvement of the mechanical properties in the thermoelastic state

An impact modifier for PVC is a material that when incorporated into a naturally brittle material (eg PVCu) converts it to one of high toughness (where the tensile strength of the material is equal or higher than its yield stress).

The masterbatch may further include one or more additives including calcium oxide (typically present in an amount 4.0 to 6.0% by weight of the masterbatch), calcium stearate (typically present in an amount 1.5 to 6.0% by weight of the masterbatch), chalk (typically present in an amount 0.0 to 30.0% by weight of the masterbatch), a wax, such as amide wax, polyethylene wax oxidised or unoxidised, or montan wax (the wax is preferably present in an amount 0% to 10% by weight of the masterbatch).

Advantageously, when the masterbatch according to the present invention is used to colour PVC, the resultant coloured PVC compound does not contain ingredients which would be detrimental to the coloured PVC compound.

Preferably, the chlorinated polyolefin is present in an amount up to about 30% by weight of the total weight of the masterbatch. Further preferably, the chlorinated polyolefin is present in an amount up to 25% by weight of the total weight of the masterbatch.

The chlorinated polyolefin may include chlorinated polyethylene or chlorinated polypropylene although chlorinated polyethylene is preferred. Typically the chlorine content of the polyolefin should be greater than 30. The crystallinity (DS) of the chlorinated polyolefin may vary from about 0 to about 1.0, although it is preferred crystallinity is about 0.7.

The shore A hardness of the chlorinated polyolefin is preferably no more than about 95, typically no more than about 65.

The acrylic processing aid may be present in an amount up to about 10% by weight of the masterbatch. However, it is preferred that the acrylic processing aid is present in an amount up to about 5% by weight of the masterbatch.

Preferred acrylic processing aids include a methyl-methacrylate based processing aids, although other suitable acrylic processing aids may be included. The methyl methacrylate based processing aids are typically co-polymerised with ethyl acrylate (EA), Butyl acrylate (BA), Butyl methylacrylate (BMA) or styrene. A particularly preferred processing aid includes a polymethyl methacrylate based processing aid, such as the type commercially available as Reamod P220 or Reamod P270.

Methyl methacrylate based processing aids are preferred as they have:
- no or a retarding influence on the melting process
- no influence on the viscosity of the PVC melt
- moderate die swell
- moderate adhesion to metal
- favourable influence on thermoforming behaviour

The acrylic impact modifier is preferably present in an amount up to about 30% by weight of the masterbatch, further preferably in an amount up to about 25% by weight of the masterbatch.

The acrylic impact modifier may be an acrylic/styrene polymer. Alternatively poly (BA/MMA) or poly(EA/MMA)may be used. A preferred impact modifier includes Paraloid HIA80 or Paraloid KM 355. It is, however, envisaged that ABS and MBS may be used in the present invention.

The use of polyacrylates as the impact modifier are particularly advantageous as they have the following properties:
- trouble free processing
- high light and weathering resistance
- high level of notched impact strength achievable
- good surface formation
- high aging resistance

The dye and/or pigment may be any standard dye/pigment used in the colouring of thermoplastics.

The ratio of the amounts of the chlorinated polyolefin, acrylic processing aid, acrylic impact modifier and the dye or pigment may be varied depending on the pigments and/or dye used, and also the concentration required and the end use of the masterbatch.

The present invention has a further advantage in the thermoplastics industry, as the masterbatch according to the invention has the advantage that additional processing aids (which reduce fusion time, increase lubrication and stabilise melt flow) and impact modifiers (which reduce brittleness) do not need to be further added to the thermoplastic coloured with the masterbatch according to the invention. Furthermore, the acrylic processing and the impact modifier have the advantage of improving the gloss of the resultant coloured PVC.

Accordingly, there is further provided an additive for use in PVC processing, which comprises a blend of, at least,
i) a chlorinated polyolefin;
ii) one or more of an acrylic processing aid, calcium stearate and a wax processing aid;
iii) an acrylic impact modifier; and
iv) at least one dye, pigment or functional additive.

The chlorinated polyolefin, the acrylic processing aid and the acrylic impact modifier are substantially as described hereinbefore.

According to a further aspect of the present invention, there is provided a method of manufacturing a masterbatch carrier, which method includes:
a) blending at least i) a chlorinated polyolefin, ii) one or more of an acrylic processing aid, calcium stearate and a wax processing aid, iii) an acrylic impact modifier, and iv) at least one dye, pigment or functional additive; and
b) forming the blend into a shaped body.

According to yet a further aspect of the present invention there is provided a method of manufacturing a masterbatch suitable for use in the colouring of PVC (in particular PVCu), which method includes:
a) blending at least i) a chlorinated polyolefin, ii) one or more of an acrylic processing aid, calcium stearate and a wax processing aid, iii) an acrylic impact modifier, and iv) at least one dye, pigment or functional additive; and
b) forming the blend into a shaped body.

The chlorinated polyolefin, the acrylic processing aid and the acrylic impact modifier are substantially as described herein before.

The blending in step (a) is typically in a high speed high shear mixer, such as a Henschel, a TK Fielder or a Papenmeir mixer. The temperature during step (a) typically raises above ambient temperature. The elevated temperature is typically attained by frictional heat of the components of the blend. However, it is envisaged that a heating means may be utilised in order to increase the temperature if required. It is preferred that the temperature is controlled so as to remain substantially below about 80°C, preferably below about 70°C.

It is preferred that a process oil (such as white mineral oil, such as Presol 120) is added during step (a). The addition of the process oil advantageously dampens the blend, thereby aiding fusion of the components in step (a) and also assists in the formation of the shaped body in step (b) by, for example, extrusion. The process oil therefore acts as a lubricant.

The blending is typically carried out at a temperature in the range of from ambient to about 80°C, such as 70°C.

The chlorinated polyolefin, the acrylic processing aid and the acrylic impact modifier are all preferably free flowing powders, typically having a particle size of less than about 1200µ (preferably less than about 700µ) in diameter.

The additives (if present) and the dye and/or pigment typically have a particle size of less than about 1200µ in diameter, although it is envisaged that the particle size may be less than about 100µ in diameter (or less).

Preferably the chlorinated polyolefin, the acrylic modifier and the process oil (if present) are preblended prior to step (a). The preblending may be in the same vessel used for the blending in step (a), however, it is envisaged that a different vessel may be used.

The preblending may be for up to about 1 minute, however, it is preferred that the preblending is for up to about 20 seconds.

The resultant blend of chlorinated polyolefin, acrylic modifier and process oil (if present) achieved in the preblend is subsequently blended with the remaining components of the blend in step (a). The blend in step (a) may be for up to about 30 minutes, preferably up to about 20 minutes.

The temperature achieved during step (a) and/or step (b) may be up to about 70 to 80°C. However, it will be apparent to a person skilled in the art that the temperature achieved and/or the blending time in step (a) is dependent on the ingredients.

The forming in step (b) is typically by extrusion, using for example a co-rotating twin screw extruder. The extrusion is preferably carried out on an extruder configured with at least two mixing zones and/or at least eight temperature zones.

The extrusion temperature may be up to about 190°C.

Although the temperature is typically in the range 125 to 140°C, averaging at about 135°C.

The blend may develop frictional heat whilst in the extruder. If the temperature rises over about 200°C the blend may degrade. It is therefore preferred that the temperature of the blend in step (b) is controlled, using for example, external cooling means.

Following extrusion the formed product is typically in the form of elongate strands (typically having a diameter of about 1-2mm). The elongate strands are subsequently pelletised using methods known in the art of forming pellets by extrusion or the like.

According to yet a further aspect of the present invention, there is provided a method of colouring PVC (in particular a PVCu), which method includes blending a masterbatch manufactured according to the present invention with a base PVC material.

The masterbatch is typically blended with the PVC material in a ratio in the range 1:100 to 1:10 masterbatch to base PVC material.

The present invention will be illustrated, by way of example only.

The chlorinated polyolefin and the acrylic impact modifier are weighed and loaded into HSM. Preweighed process oil (if present) is subsequently added. The components are mixed, typically for about 5 seconds before adding the remaining components. The components are then mixed for about 20 minutes or mixed until the desired temperature of the homogenised components is achieved (normally between 50 - 75°C). The blended components are decanted to a day-bin.

The contents of the day-bin are emptied into extruder feed hopper (H), extruder feed screws are started (not to exceed about 600rpm) and the feed hopper started. Resulting extrudate is fed from the die through the water bath and then drier and into a pelletiser.

The feed hopper receives the contents of the day-bin. The blended components pass through a series of controlled temperature zones (T1, T2, T3, T4, T5, T6, T7 and T8). Temperature zones T1 to T7 being controlled at about 140°C and T8 being controlled at about 110 - 120°C. After passing through the controlled temperature zones the blend enters a transition zone which is controlled at a temperature of about 140°C and to spaghetti die which produces the strands of blend.

The following examples are reference examples.

### Example 1

The following ingredients (all having a particle size of less than about 1200µ) were added to the high speed mixer.

| **Ingredient** | **Weight** | **Weight %** |
|---|---|---|
| Wax PN 909 (processing aid) | 0.0200 | 2.0028 |
| Paraloid KM355 | 0.2250 | 22.5315 |
| Process Oil | 0.0200 | 2.0028 |
| Chlorinated low density polyethylene 3611P | 0.9500 | 9.5133 |

The ingredients were blended for up to 15 seconds, typically about 5 seconds.

The following ingredients were subsequently added to the high speed mixer and blended for a further 15 minutes.

| **Ingredient** | **Weight** | **Weight %** |
|---|---|---|
| Alum Low Odour | 0.0380 | 3.8053 |
| PL Gold 323 | 0.3000 | 30.0420 |
| Yellow 83 | 0.0133 | 1.3318 |
| Red 247:1 | 0.0023 | 0.2303 |
| Chalk | 0.0400 | 4.0056 |
| Calcium Oxide | 0.0500 | 5.0070 |
| CA Stearate | 0.0200 | 2.0028 |
| Wax 10DS | 0.0750 | 7.5105 |
| F00088 | 0.1000 | 10.0140 |

The temperature of the mixer is controlled such that the temperature does not exceed about 85°C.

After blending the resultant blend is discharged to a day bin which is subsequently emptied into on extruder feed hopper. The extruder feed screws are started (not to exceed about 600rpm) and the feed hopper started.

The blended components pass through a series of continued temperature zones as described hereinbefore with reference to figure 2. After passing through the controlled temperature zones the blend enters a transition zone which is controlled at a temperature of about 140°C and subsequently to a spaghetti die which produces strands of the blend.

The strands are fed from the die through a water bath and into a pellitizer to form free flowing pellets

These pellets are then used to colour PVCu.

### Example 2

The following ingredients were blended and a masterbatch prepared according to the method outlined in Example 1.

The ingredients preblended are identified by #. All of the ingredients are in particulate form having a diameter less than about 1500µ.

| **Ingredient** | **Weight** | **Weight %** |
|---|---|---|
| Alum Low Odour | 0.1000 | 10.0000 |
| Chalk | 0.2850 | 28.5000 |
| Calcium Oxide | 0.0500 | 5.0000 |
| CA Stearate | 0.0250 | 2.5000 |
| Wax 10DS (processing aid) # | 0.0750 | 7.5000 |
| Paraloid KM355 # | 0.1000 | 10.0000 |
| Chlorinated low density polyethylene 3611P # | 0.2500 | 25.0000 |
| F00088 | 0.1000 | 10.0000 |
| Process Oil 01 # | 0.0150 | 1.5000 |

### Example 3

The following ingredients were blended and a masterbatch prepared according to the method outlined in Example 1.

The ingredients preblended are identified by #. All of the ingredients are in particulate form having a diameter less than about 1500µ.

| **Ingredient** | **Weight** | **Weight %** |
|---|---|---|
| TiO₂ | 0.5500 | 54.9560 |
| Blue U/M 08 | 0.0022 | 0.2198 |
| Violet U/M 11 | 0.0066 | 0.6594 |
| Calcium Oxide | 0.0500 | 4.9960 |
| CA Stearate | 0.0200 | 1.9984 |
| Wax PN.909 # | 0.0200 | 1.9984 |
| Wax 10DS | 0.0600 | 5.9952 |
| Paraloid KM355 # | 0.0900 | 8.9928 |
| Chlorinated low density polyethylene 3611P # | 0.2020 | 20.1838 |

### Example 4

The following ingredients were blended and a masterbatch prepared according to the method outlined in Example 1 so as to provide a masterbatch having a magenta colour.

The ingredients preblended are identified by #. All of the ingredients are in particulate form having a diameter less than about 1500µ.

| **Ingredient** | **Weight** | **Weight %** |
|---|---|---|
| Red 122 | 0.0300 | 3.0000 |
| Blue U/M 08 | 0.0060 | 0.6000 |
| Barytes | 0.4640 | 46.4000 |
| Calcium Oxide | 0.0500 | 5.0000 |
| CA Stearate | 0.0250 | 2.5000 |
| Wax E # | 0.0750 | 7.5000 |
| Paraloid KM355 # | 0.1100 | 11.0000 |
| Chlorinated low density polyethylene 3611P # | 0.2400 | 24.0000 |

### Example 5

The following ingredients were blended and a masterbatch prepared according to the method outlined in Example 1.

The ingredients preblended are identified by #. All of the ingredients are in particulate form having a diameter less than about 1500µ.

| **Ingredient** | **Weight** | **Weight %** |
|---|---|---|
| Pearl 1000/Pearl 5000 | 0.1100 | 10.9945 |
| Optical | 0.0055 | 0.5497 |
| Barytes | 0.2350 | 23.4882 |
| Calcium Oxide | 0.0500 | 4.9975 |
| CA Stearate | 0.0500 | 4.9975 |
| Wax PN.909 # | 0.0500 | 4.9975 |
| Wax OP | | |
| Paraloid HIA80 # | 0.2500 | 24.9875 |
| Chlorinated low density polyethylene 3611P # | 0.2500 | 24.9875 |

Approx 1 minute before the end of the mixing the following was added so as to provide a frost sparkle colour masterbatch.

| **Ingredient** | **Weight** | **Weight %** |
|---|---|---|
| Pearl 1000/Pearl 5000 | 0.1100 | 10.9945 |

### Example 6

The following ingredients were blended and a masterbatch prepared according to the method outlined in Example 1.

The ingredients preblended are identified by #. All of the ingredients are in particulate form having a diameter less than about 1500µ.

| **Ingredient** | **Weight** | **Weight %** |
|---|---|---|
| Blue 15.3 | 0.0100 | 1.0000 |
| Barytes | 0.3350 | 33.5000 |
| Calcium Oxide | 0.0500 | 5.0000 |
| Wax PN.909 # | 0.0200 | 2.0000 |
| CA Stearate | 0.0300 | 3.0000 |
| Wax OP | 0.0500 | 5.0000 |
| Paraloid HIA80 # | 0.2500 | 25.0000 |
| Chlorinated low density polyethylene 3611P # | 0.2500 | 25.0000 |
| Process Oil 01 # | 0.0050 | 0.5000 |

### Example 7

The following ingredients were blended and a masterbatch carrier system prepared according to the method outlined in Example 1.

The ingredients preblended are identified by #. All of the ingredients are in particulate from having a diameter less than about 1500µ

| **Ingredient** | **Weight** | **Weight %** |
|---|---|---|
| Chalk | 0.4800 | 48.0000 |
| Calcium Oxide | 0.0500 | 5.0000 |
| Calcium Stearate | 0.0250 | 2.5000 |
| Wax PN 909 # | 0.0200 | 2.0000 |
| Wax E | 0.0750 | 7.5000 |
| Paraloid KM355 # | 0.1100 | 11.0000 |
| Chlorinated low density polyethylene 3611P # | 0.2400 | 24.0000 |

The resultant carrier was suitable for use in the processing of PVC.

### Example 8

The following ingredients were blended and a masterbatch carrier system an additive prepared according to the method outlined in Example 1.

The ingredients preblended are identified by #. All of the ingredients are in particulate from having a diameter less than about 1500µ

| **Ingredient** | **Weight** | **Weight %** |
|---|---|---|
| Barytes | 0.3500 | 35.0000 |
| Calcium Oxide | 0.0500 | 5.0000 |
| Calcium Stearate | 0.0500 | 5.0000 |
| Wax OP # | 0.0500 | 5.0000 |
| Paraloid HIA 80 # | 0.2500 | 25.0000 |
| Chlorinated low density polyethylene 3611P # | 0.2500 | 25.0000 |

The resultant carrier was suitable for use in the processing of PVC.

### Example 9

The following ingredients were blended and a masterbatch carrier system prepared according to the method outlined in Example 1.

The ingredients preblended are identified by #. All of the ingredients are in particulate from having a diameter less than about 1500µ

| **Ingredient** | **Weight** | **Weight %** |
|---|---|---|
| Chalk | 0.4650 | 46.5000 |
| Calcium Oxide | 0.0500 | 5.0000 |
| Calcium Stearate | 0.0250 | 2.5000 |
| Wax PN909 # | 0.0200 | 2.0000 |
| PE Wax | 0.0200 | 2.0000 |
| Wax E | 0.0600 | 6.0000 |
| Reamod P270 # | 0.0275 | 2.7500 |
| Paraloid KM355 # | 0.0825 | 8.2500 |
| Chlorinated low density polyethylene 36611P # | 0.2400 | 24.0000 |
| Process oil # | 0.0100 | 1.0000 |

The resultant carrier was suitable for use in the processing of PVC.

### Example 10

The following ingredients were blended and a masterbatch carrier system prepared according to the method outlined in Example 1.

The ingredients preblended are identified by #. All of the ingredients are in particulate from having a diameter less than about 1500µ

| **Ingredient** | **Weight** | **Weight %** |
|---|---|---|
| Chalk | 0.4700 | 47.9591 |
| Calcium Oxide | 0.0500 | 5.1020 |
| Calcium Stearate | 0.0200 | 2.0408 |
| Wax PN909 | 0.0200 | 2.0408 |
| Wax E | 0.0600 | 6.1224 |
| Paraloid KM355 | 0.1580 | 16.1224 |
| Chlorinated low density polyethylene 3611p # | 0.1920 | 19.5918 |
| Process Oil # | 0.0100 | 1.0204 |

The resultant carrier was suitable for use in the processing of PVC.

## Claims

1. A masterbatch which includes:
a chlorinated polyolefin;
an acrylic processing aid;
an acrylic impact modifier; and
at least one dye, pigment or functional additive.

2. A masterbatch according to claim 1 which further includes processing additives, incidental ingredients, fillers and/or impurities.

3. A masterbatch according to any preceding claim, which further includes one or more additives including calcium oxide (typically present in an amount 4.0 to 6.0% by weight of the masterbatch), calcium stearate (typically present in an amount 1.5 to 6.0% by weight of the masterbatch), chalk (typically present in an amount 0.0 to 30.0% by weight of the masterbatch), a wax, such as amide wax, polyethylene wax oxidised or unoxidised, or montan wax (the wax is preferably present in an amount 0% to 10% by weight of the masterbatch).

4. A masterbatch according to any preceding claim, wherein the chlorinated polyolefin is present in an amount up to 30% by weight (preferably 25% by weight) of the total weight of the masterbatch; and/or
the chlorinated polyolefin includes chlorinated polyethylene or chlorinated polypropylene; and/or
the crystallinity (DS) of the chlorinated polyolefin may vary from 0 to 1.0, (preferably the crystallinity is 0.7).

5. A masterbatch according to any preceding claim, wherein the chlorine content of the polyolefin is greater than 30.

6. A masterbatch according to any preceding claim, wherein the shore A hardness of the chlorinated polyolefin is no more than 95, (typically no more than 65).

7. A masterbatch according to any preceding claim, wherein the acrylic processing aid is present in an amount up to 10% (preferably up to 5%) by weight of the masterbatch.

8. A masterbatch according to any preceding claim, wherein the acrylic processing aid is a methylmethacrylate based processing aid, preferably a co-polymerised with ethyl acrylate (EA), Butyl acrylate (BA), Butyl methylmethacrylate (BMA) or styrene.

9. A masterbatch according to any preceding claim, wherein the acrylic processing aid includes a polymethyl methacrylate based processing aid, (such as the type commercially available as Reamod P220 or Reamod P270).

10. A masterbatch according to any preceding claim, wherein the acrylic impact modifier is present in an amount up to 30% by weight (preferably up to 25% by weight) of the masterbatch; and/or
may be an acrylic/styrene polymer, poly (BA/MMA) or poly (EA/MMA).

11. A multipurpose masterbatch carrier which includes:
a chlorinated polyolefin;
an acrylic processing aid; and
an acrylic impact modifier.

12. A carrier according to claim 11 for use with dyes, pigments, functional additives or the like.

13. Use of an additive in PVC processing, the additive comprising a blend of, a chlorinated polyolefin, an acrylic processing aid and an acrylic impact modifier.

14. A method of manufacturing a masterbatch carrier, which method includes:
a) blending at least one chlorinated polyolefin, at least one acrylic processing aid at least one acrylic impact modifier; and
b) forming the blend into a shaped body.

15. A method of manufacturing a masterbatch suitable for use in the colouring of PVC, which method includes:
a) blending at least one chlorinated polyolefin, at least one acrylic processing aid at least one acrylic impact modifier; and
b) forming the blend into a shaped body.

16. A method according to claim 15, wherein the blending in step a) is in a high speed high shear mixer; and/or
the temperature during step a) raises above ambient temperature, preferably below 80°C.

17. A method according to claim 16, wherein a process oil is added during step a).

18. A method according to any of claims 15 to 17, wherein the chlorinated polyolefin, the acrylic processing aid and the acrylic impact modifier are all preferably free flowing powders, typically having a particle size of less than 1200µ (preferably less than 700µ) in diameter.

19. A method according to any of claims 15 to 18, wherein the additives (if present) and the dye and/or pigment typically have a particle size of less than 1200µ in diameter.

20. A method according to any of claims 15 to 19, wherein the chlorinated polyolefin, the acrylic modifier and the process oil (if present) are preblended prior to step a), preferably for up to 1 minute.

21. A method according to claims 19 or 20, wherein the resultant blend of chlorinated polyolefin, acrylic modifier and process oil (if present) is subsequently blended with the remaining components in step a).

22. A method according to any of claims 15 to 21, wherein the blending in step a) may be for up to 30 minutes, preferably up to 20 minutes; and/or the forming in step b) is by extrusion, preferably using a co-rotating screw extruder.

23. A method according to any of claims 15 to 22, wherein the extrusion temperature may be up to 190°C, (preferably in the range 125° to 140°C).

24. A method of colouring PVC, which method includes blending a masterbatch according to any of claims 1 to 10, with a base PVC material, preferably in a ratio in the range 1:100 to 1:10 masterbatch to base PVC material.

## Patentansprüche

1. Masterbatch umfassend:
ein chloriertes Polyolefin,
ein acrylbasiertes Verarbeitungshilfsmittel,
einen acrylbasierten Elastizitätsmodifizierer und
wenigstens einen Farbstoff, ein Pigment oder einen funktionellen Hilfsstoff.

2. Masterbatch gemäß Anspruch 1, das weiter umfasst Verarbeitungshilfsmittel, zusätzliche Inhaltsstoffe, Füllstoffe und/oder Fremdstoffe.

3. Masterbatch gemäß einem der voranstehenden Ansprüche, das weiter umfasst einen oder mehrere Hilfsstoffe, ausgewählt aus der Gruppe, umfassend Calciumoxid (typischerweise vorliegend mit einem Anteil von 4,0 bis 6,0 Gew.-% des Masterbatches), Calciumstearat (typischerweise vorliegend mit einem Anteil von 1,5 bis 6,0 Gew.-% des Masterbatches), Kalkstein (typischerweise vorliegend mit einem Anteil von 0,0 bis 30,0 Gew.-% des Masterbatches) und Wachs wie Amidwachs, Polyethylenwachs oxidiert oder nichtoxidiert, oder Montanwachs (das Wachs ist vorzugsweise vorliegend mit einem Anteil von 0 bis 10 Gew.-% des Masterbatches).

4. Masterbatch gemäß einem der voranstehenden Ansprüche, wobei das chlorierte Polyolefin vorliegt mit einem Anteil von bis zu 30 Gew.-% (vorzugsweise 25 Gew.-%) des Gesamtgewichtes des Masterbatches und/oder
das chlorierte Polyolefin beinhaltet chloriertes Polyethylen oder chloriertes Polypropylen; und/oder
die Kristallinität (DS) des chlorierten Polyolefin variieren kann von 0 bis 1,0 (vorzugsweise ist die Kristallinität 0,7).

5. Masterbatch gemäß einem der voranstehenden Ansprüche, wobei der Chlorgehalt des Polyolefins höher als 30 ist.

6. Masterbatch gemäß einem der voranstehenden Ansprüche, wobei die Shore-A-Härte des chlorierten Polyolefins nicht mehr als 95 ist (vorzugsweise nicht mehr als 65).

7. Masterbatch gemäß einem der voranstehenden Ansprüche, wobei das acrylbasierte Verarbeitungshilfsmittel vorliegt mit einem Anteil von bis zu 10 (vorzugsweise bis zu 5) Gew.-% des Masterbatches.

8. Masterbatch gemäß einem der voranstehenden Ansprüche, wobei das acrylbasierte Verarbeitungshilfsmittel ein methylmethacrylatbasiertes Verarbeitungshilfsmittel ist, vorzugsweise copolymerisiert mit Ethylacrylat (EA), Butylacrylat (BA), Butylmethylmethacrylat (BMA) oder Styrol.

9. Masterbatch gemäß einem der voranstehenden Ansprüche, wobei das acrylbasierte Verarbeitungshilfsmittel ein Polymethylmethacrylatbasiertes Verarbeitungshilfsmittel beinhaltet (wie in der Art kommerziell erhältlich als Reamod P220 oder Reamod P270).

10. Masterbatch gemäß einem der voranstehenden Ansprüche, wobei der acrylbasierte Elastizitätsmodifizierer vorliegt mit einem Anteil von bis zu 30 Gew.-% (vorzugsweise bis zu 25 Gew.-%) des Masterbatches und/oder
ein acrylbasiertes/Styrol-Polymer, Poly-(BA/MMA) oder Poly-(EA/MMA) sein kann.

11. Mehrzweek-Masterbatch-Träger umfassend:
ein chloriertes Polyolefin,
ein acrylbasiertes Verarbeitungshilfsmittel,
einen acrylbasierten Elastizitätsmodifizierer.

12. Träger gemäß Anspruch 11 zur Verwendung mit Farbstoffen, Pigmenten, funktionellen Hilfsstoffen oder Ähnlichem.

13. Verwendung eines Hilfsstoffes in der PVC-Verarbeitung, wobei der Hilfsstoff umfasst eine Mischung aus einem chlorierten Polyolefin, einem acrylbasierten Verarbeitungshilfsmittel und einem acrylbasierten Elastizitätsmodifizierer.

14. Verfahren zur Herstellung eines Masterbatch-Trägers, wobei die Methode umfasst:
a) Mischen wenigstens eines chlorierten Polyolefins, wenigstens eines acrylbasierten Verarbeitungshilfsmittels, wenigstens eines acrylbasierten Elastizitätsmodifizierers und
b) Formen der Mischung in einen gestalteten Körper.

15. Verfahren zur Herstellung eines Masterbatches geeignet zum Gebrauch in der Färbung von PVC, wobei die Methode umfasst:
a) Mischen wenigstens eines chlorierten Polyolefins, wenigstens eines acrylbasierten Verarbeitungshilfsmittels, wenigstens eines acrylbasierten Elastizitätsmodifizierers; und
b) Formen der Mischung in einen gestalteten Körper.

16. Verfahren gemäß Anspruch 15, wobei die Mischung in Schritt a) in einem Hochgeschwindigkeits-High-Shear-Mixer und/oder
die Temperatur während Schritt a) auf über Raumtemperatur ansteigt, vorzugsweise auf unter 80°C.

17. Verfahren gemäß Anspruch 16, wobei ein Verfahrensöl während des Schrittes a) hinzugefügt wird.

18. Verfahren gemäß einem der Ansprüche 15 - 17, wobei das chlorierte Polyolefin, das acrylbasierte Verarbeitungsmittel und der acrylbasierte Elastizitätsmodifizierer vorzugsweise alle fließfähige Puder sind, typischerweise mit einer Partikelgröße kleiner als 1200µm (vorzugsweise kleiner als 700 µm) im Durchmesser.

19. Verfahren gemäß einem der Ansprüche 15 - 18, wobei die Hilfsstoffe (sofern anwesend) und der Farbstoff und/oder das Pigment typischerweise eine Partikelgröße kleiner als 1200 µm im Durchmesser haben.

20. Verfahren gemäß einem der Ansprüche 15 - 19, wobei das chlorierte Polyolefin, der acrylbasierte Modifizierer und das Verfahrensöl (sofern anwesend) vorgemischt sind vor Schritt a), vorzugsweise für bis zu 1 Minute.

21. Verfahren gemäß Anspruch 19 oder 20, wobei die resultierende Mischung aus chloriertem Polyolefin, acrylbasiertem Modifizierer und Verfahrensöl (sofern anwesend) nachträglich vermischt wird mit den übrigen Komponenten aus Schritt a).

22. Verfahren gemäß einem der Ansprüche 15 - 21, wobei die Mischung in Schritt a) für bis zu 30 Minuten dauern kann, vorzugsweise für bis zu 20 Minuten und/oder die Formgebung in Schritt b) durch Extrudierverfahren gemacht wird, vorzugsweise unter Benutzung einer co-rotierenden Extruderschnecke.

23. Verfahren gemäß einem der Ansprüche 15 - 22, wobei die Extrudier-Temperatur bis zu 190°C sein kann (vorzugsweise im Bereich von 122 bis 140°C).

24. Verfahren zum Färben von PVC, wobei das Verfahren ein Mischen eines Masterbatches gemäß einem der Ansprüche 1 - 10 mit einem Grund-PVC-Material, vorzugsweise in einem Verhältnis 1:100 bis 1:10 Masterbatch zu Grund-PVC-Material, umfasst.

## Revendications

1. Mélange maître comprenant :
une polyoléfine chlorée ;
un adjuvant acrylique ;
un modificateur de choc acrylique ; et
au moins un colorant, un pigment ou un additif fonctionnel.

2. Mélange maître selon la revendication 1, comprenant en outre des additifs de transformation, des ingrédients secondaires, des matières de charges et/ou des impuretés.

3. Mélange maître selon l'une quelconque des revendications précédentes, comprenant en outre un ou plusieurs additifs tels que l'oxyde de calcium (traditionnellement présent en une quantité allant de 4,0 % à 6,0 % en poids du mélange maître), le stéarate de calcium (traditionnellement présent en une quantité allant de 1,5 % à 6,0 % en poids du mélange maître), de la craic (traditionnellement présente en une quantité allant de 0,0 % à 30, % en poids du mélange maître), une cire, telle qu'une cire d'amide, une cire de polyéthylène oxydée ou non oxydée, ou une cire de lignite (la cire est de préférence présente en une quantité allant de 0 % à 10 % en poids du mélange maître).

4. Mélange maître selon l'une quelconque des revendications précédentes, dans lequel la polyoléfine chlorée est présente en une quantité allant jusqu'à 30 % en poids (de préférence 25 % en poids) du poids total du mélange maître ; et/ou
la polyoléfine chlorée comprend un polyéthylène chloré ou un polypropylène chloré ; et/ou
la cristallinité (DS) de la polyoléfine chlorée peut varier de 0 à 1,0 (de préférence, la cristallinité est de 0,7).

5. Mélange maître selon l'une quelconque des revendications précédentes, dans lequel la teneur en chlore de la polyoléfine est supérieure à 30.

6. Mélange maître selon l'une quelconque des revendications précédentes, dans lequel la dureté shore A de la polyoléfine chlorée est au plus 95 (traditionnellement au plus 65).

7. Mélange maître selon l'une quelconque des revendications précédentes, dans lequel l'adjuvant acrylique est présent en une quantité allant jusqu'à 10 % (de préférence allant jusqu'à 5 %) en poids du mélange maître.

8. Mélange maître selon l'une quelconque des revendications précédentes, dans lequel l'adjuvant acrylique est un adjuvant à base de méthylméthacrylate de, de préférence copolymérisé avec de l'acrylate d'éthyle (EA), de l'acrylate de butyle (BA), du méthylméthacrylate de butyle (BMA) ou du styrène.

9. Mélange maître selon l'une quelconque des revendications précédentes, dans lequel l'adjuvant acrylique comprend un adjuvant à base de poly(méthylméthacrylate) (comme le type disponible dans le commerce sous le nom de Reamod P220 ou Reamod P270).

10. Mélange maître selon l'une quelconque des revendications précédentes, dans lequel le modificateur de choc acrylique est présent en une quantité allant jusqu'à 30 % en poids (de préférence allant jusqu'à 25 % en poids) du mélange maître ; et/ou
peut être un polymère acrylique/styrène, un poly(BA/MMA) ou un poly(EA/MMA).

11. Support de mélange maître à usages multiples, comprenant :
une polyoléfine chlorée ;
un adjuvant acrylique ; et
un modificateur de choc acrylique.

12. Support selon la revendication 11, utilisable avec des colorants, des pigments, des additifs fonctionnels ou équivalents.

13. Utilisation d'un additif dans la transformation du PVC, l'additif comprenant un mélange composé d'une polyoléfine chlorée, d'un adjuvant acrylique et d'un modificateur de choc acrylique.

14. Procédé de fabrication d'un support de mélange maître, ledit procédé comprenant :
a) le mélange d'au moins une polyoléfine chlorée, d'au moins un adjuvant acrylique et d'au moins un modificateur de choc acrylique ; et
b) la formation du mélange en un corps mis en forme.

15. Procédé de fabrication d'un mélange maître approprié pour colorer un PVC, ledit procédé comprenant :
a) le mélange d'au moins une polyoléfine chlorée, d'au moins un adjuvant acrylique et d'au moins un modificateur de choc acrylique ; et
b) la formation du mélange en un corps mis en forme.

16. Procédé selon la revendication 15, dans lequel le mélange dans l'étape a) est réalisé dans un mélangeur à vitesse élevée et à cisaillement élevé ; et/ou
la température pendant l'étape a) augmente au-dessus de la température ambiante, de préférence en dessous de 80 °C.

17. Procédé selon la revendication 16, dans lequel une huile de traitement est ajoutée pendant l'étape a).

18. Procédé selon l'une quelconque des revendications 15 à 17, dans lequel la polyoléfine chlorée, l'adjuvant acrylique et le modificateur de choc acrylique sont tous de préférence des poudres non agglomérées possédant traditionnellement une taille de particule inférieure à un diamètre de 1 200 µ (de préférence inférieure à 700 µ).

19. Procédé selon l'une quelconque des revendications 15 à 18, dans lequel les additifs (s'ils sont présents) et le colorant et/ou le pigment possèdent traditionnellement une taille de particule inférieure à un diamètre de 1 200 µ.

20. Procédé selon l'une quelconque des revendications 15 à 19, dans lequel la polyoléfine chlorée, le modificateur acrylique et l'huile de traitement (si elle est présente) sont prémélangés avant l'étape a), de préférence pendant 1 minute au maximum.

21. Procédé selon l'une des revendications 19 ou 20, dans lequel le mélange résultant de polyoléfine chlorée, de modificateur acrylique et d'huile de traitement (si elle est présente) est ensuite mélangé avec les composants restants dans l'étape a).

22. Procédé selon l'une quelconque des revendications 15 à 21, dans lequel le mélange dans l'étape a) peut être réalisé pendant 30 minutes au maximum, de préférence pendant 20 minutes au maximum ; et/ou
la formation dans l'étape b) est réalisée par extrusion, de préférence au moyen d'une machine d'extrusion à vis co-rotative.

23. Procédé selon l'une quelconque des revendications 15 à 22, dans lequel la température d'extrusion peut aller jusqu'à 190 °C (de préférence dans la plage de 125 °C à 140 °C).

24. Procédé de coloration d'un PVC, ledit procédé comprenant le mélange d'un mélange maître selon l'une quelconque des revendications 1 à 10 avec un matériau PVC de base, de préférence à un rapport mélange maître sur matériau PVC de base situé dans la plage de 1 : 100 à 1 : 10.
